# EUROPEAN PATENT SPECIFICATION

(11) **EP 1 669 654 B1**
(45) Date of publication and mention of the grant of the patent: **09.07.2008**
(21) Application number: 05026577.6
(22) Date of filing: 06.12.2005
(51) Int. Cl.: F16L 23/024

(54) **Compressor with Connector**
Kompressor mit einem Verbinder
Compresseur avec un connecteur

(30) Priority: 13.12.2004 DE 202004019206 U
(43) Date of publication of application: 14.06.2006
(73) Proprietor: Gardner Denver Deutschland GmbH, 97616 Bad Neustadt (DE)
(72) Inventor: Krines, Jürgen, 97645 Oberwaldbehrungen (DE); Rjabchenko, Evgenij, 97616 Bad Neustadt (DE); Kempf, Mario, 97616 Bad Neustadt (DE)
(74) Representative: Rau, Albrecht

(56) References cited:
- EP-A- 0 611 555
- WO-A-02/12725
- WO-A-20/04103259
- DE-A1- 19 507 853
- FR-A- 2 582 075
- PATENT ABSTRACTS OF JAPAN vol. 1998, no. 03, 27 February 1998 (1998-02-27) & JP 09 295097 A (HITACHI CABLE LTD), 18 November 1997 (1997-11-18)

## Description

The invention relates to a compressor, in particular a lateral channel compressor.

A compressor is generally understood to be an engine in which fluid is compressed by rotation of an impeller (or bladed wheel) in a working area. On the inlet side, the working area of a compressor of the species is customarily joined to a connecting piece by which to aspirate the fluid that is to be compressed. On the outlet side of the working area, the compressed fluid is ejected via a pressure joint. In a lateral channel compressor, the working area comprises a lateral channel which adjoins the impeller. Upon rotation of the impeller, the fluid, while flowing helically between the impeller and the lateral channel, is delivered on a distance from the inlet connecting piece towards the outlet connecting piece and compressed successively.

For connection of the compressor to a plant which comprises for example an outlet vessel on the suction side and a pressure tank on the compression side, the inlet connecting piece is joined to a fluid duct of the outlet vessel and the outlet connecting piece to a fluid duct of the pressure tank. To this end, a connection must be produced between the inlet and outlet connecting piece, having a duct end of the respective fluid duct in such a way that there is no possibility of liquid or gas transfer to the surroundings.

A prerequisite for coupling the inlet or outlet connecting piece with the respective duct end resides in a connecting end of a specific type (for example hose joint, threaded joint, screwed flange etc.) being available that is compatible with the respective duct end.

In a conventional compressor, the connecting end, or each connecting end, is only suitable to be coupled with a duct end of a certain type so that solely fluid ducts that have that type of a duct end can be joined to the compressor. For connection of fluid ducts to differing types of duct end, comparatively complicated retrofitting of the compressor is necessary or again the use of a specific adapter piece.

WO 02/12725 A2 discloses a pump with a pump assembly for pumping fluid. The pump further comprises a head assembly with a port plate and a head. A head port connects the head to a device requiring pressurised fluid, such as an air brush.

It is an object of the invention to specify a compressor to which easily and flexibly to connect fluid ducts with duct ends of various designs.

According to the invention, this object is attained by the features of claim 1. To this end, the compressor comprises an inlet connecting piece and an outlet connecting piece for fluid feed or discharge. A connector is allocated to at least one of these connecting pieces, the connector being provided for coupling the inlet or outlet connecting piece with a duct end of a fluid duct. According to the invention, the connector is equipped with a flange for joining the connector to the inlet or outlet connecting piece, and with a number (i.e. one or several) of connecting ends for joining the duct end. The or each connecting end is designed for optional connection to various types of duct ends.

In an especially simple embodiment, the connector only has one connecting end that is multi-functional, suiting for joining various types of duct ends. For example, the connecting end is equipped with an internal thread as well as an external thread, offering the option of joining fluid ducts with respectively corresponding threads. By alternative, the connector comprises several, in particular two connecting ends, each of which corresponding to one or several types of duct ends. For instance, a connecting end possesses a screwed flange and another connecting end, a hose joint, an internal and/or external thread etc.

In keeping with an advantageous embodiment, two connecting ends are disposed on both sides of the flange that is provided for connection to the inlet or outlet connecting piece. Appropriately, the flange is an annular projection which, by one of two opposed front faces, is optionally mountable on, or fixable to, the inlet or outlet connecting piece. Consequently, the connector can be placed on the inlet or outlet connecting piece, taking two alternative positions in which a respective connecting end is located on the outside of the inlet or outlet connecting piece, "ready" for being joined to a fluid duct, whereas the other connecting end "rests" inside the inlet or outlet connecting piece.

By advantage, the connecting end, in particular in the form of a hose joint, screwed or clamped flange, or threaded connecting piece, is provided with an internal and/or external thread.

For especially efficient absorption of the noise produced by the compressor upon operation, provision is made for a sound absorber which can be joined to the connecting end that is disposed inside the inlet or outlet connecting piece.

The advantages obtained by the invention reside in particular in that a connector, which is equipped with a number of connecting ends, is used for various types of fluid-duct ends to be joined, enabling rapid, reliable and flexible mounting of various types of fluid ducts on the inlet or outlet connecting piece of the compressor.

Details of the invention will become apparent from the ensuing description of exemplary embodiments, taken in conjunction with the drawing, in which
- Fig. 1: is a diagrammatic view of a lateral channel compressor, comprising an inlet connecting piece and an outlet connecting piece and a respective connector for a fluid duct to be joined to an inlet or outlet connecting piece; and
- Figs. 2 to 4: are longitudinal sectional views I-I according to Fig. 1 of a first embodiment of a connector;
- Figs. 5 to 7: are illustrations, in accordance with Figs. 2, 3 and 4, of an alternative embodiment of the connector.

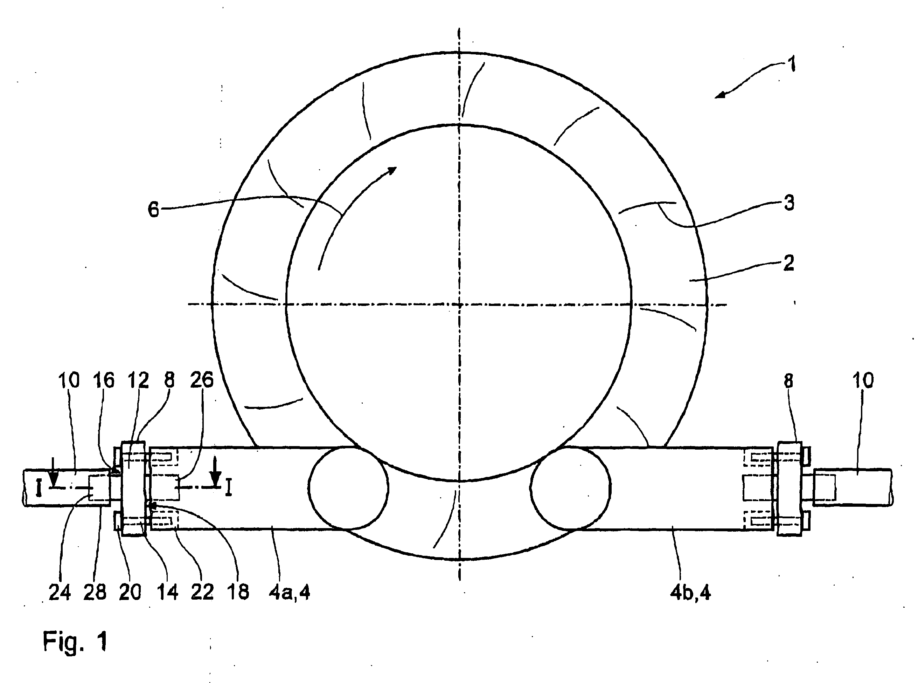

Fig. 1 is a roughly outlined diagrammatic sketch of a lateral channel compressor 1 comprising an impeller 3 which is disposed for rotation in a working area 2. An inlet connecting piece 4a is joined to the working area 2 on the inlet side and an outlet connecting piece 4b on the outlet side for feed and discharge of a fluid. Sucked by the inlet connecting piece 4a, the fluid flows in the direction of the arrow 6 through the working area 2 towards the outlet connecting piece 4b. For reasons of identity of function and equivalence of design, the inlet and outlet connecting piece 4a, 4b will be uniformly designated as connecting piece 4 in the following.

A connector 8 is allocated to each connecting piece 4, fluidically joining a fluid duct 10 on the suction side or on the compression side to the respective connecting piece 4. For the connector 8 to be fixed to the connecting piece 4, the connector 8 comprises a screwed flange 12 which is provided with a number of through holes 14 which lead through the flange 12 from a front 16 to a front 18 opposite thereof. The screwed flange 12 is mounted on the connecting piece 4 by means of screws 20 which are inserted into the through holes 14. To this end, the screws 20 engage with corresponding screw holes 22 of the connecting piece 4.

For joining the fluid duct 10 to the connecting piece 4, the connector 8 comprises a number of connecting ends 24, 26 in addition to the screwed flange 12 which is disposed approximately centrally there-between. The connecting end 24 adjoins the front 16 and the connecting end 26 the front 18 of the screwed flange 12. The screwed flanged 12 is placed on the connecting piece in such a way that the connecting end 24 is located outside the connecting piece 4 and the connecting end 26 inside the connecting piece 4. The connecting end 24 is ready for being coupled with a duct end 28 of the fluid duct 10. For the connecting end 26 to be used for coupling with a corresponding fluid-duct-10 end 28 instead of the connecting end 24, the connector 8 can be detached from the connecting piece 4 and placed on reversely, with the front 16 on the connecting piece 4 and the connecting end 24 inside the connecting piece 4. The screwed flange 12 is configured in such a way that the connector 8 may be placed optionally by one of the two fronts 16,18 on the connecting piece 4.

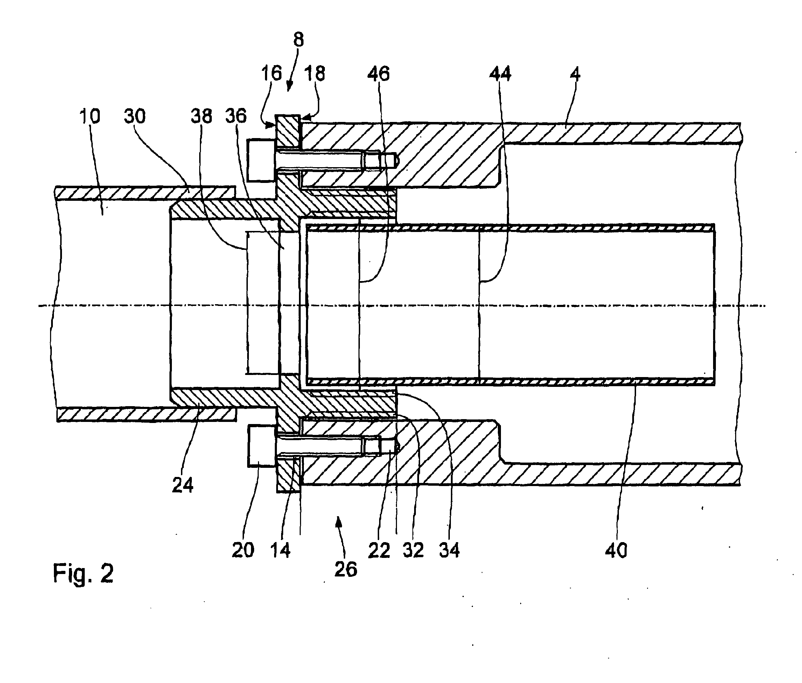

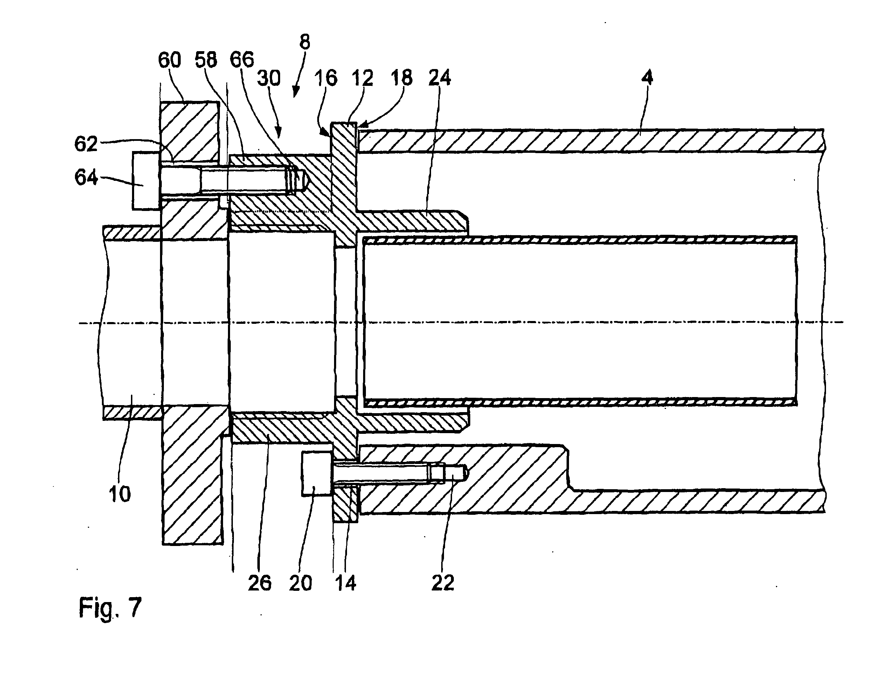

Figs. 2 to 7 illustrate exemplary embodiments of the connector 8 as seen in a longitudinal sectional view I-I of Fig. 1, with the connector 8 being provided with varying types of connecting ends 24, 26 for fluid ducts 10 to be joined that have various kinds of duct ends 28. In the embodiment according to Fig. 2, the connector 8 unites the fluid duct 10 with the connecting piece 4, the duct 10 being a hose assembly. The connecting end 24 is a hose joint which a hose end of the fluid duct 10 is pushed on directly. The connector 8 is placed by the front 1.8 on the connecting piece 4 so that the connecting end 24 is accessible. For a threaded end of the fluid duct 10 to be joined, the connecting end 26 is a threaded connecting piece, having an external thread 32 as well as an internal thread 34- In the exemplary embodiment of Fig. 2, the connecting end 26 is inside the connecting piece 4, in this position not being accessible for connection of the fluid duct 10.

For fluidic connection of the connecting end 24 to the connecting end 26, and thus for fluidic connection of the connecting piece 4 to the corresponding fluid duct 10, the connector 8 is provided with a through hole 36 of an inside diameter 38 which passes through the screwed flange 12 from the front 16 to the front 18. The connecting piece 4 further comprises a sound absorber 40 of the type of a sieve pipe or the like. The sound absorber 40 has an outside diameter 44 which, on the one hand, exceeds the inside diameter 38 of the through hole 36 and, on the other, is slightly less than the inside diameter 46 of the connecting end 26 so that the sound absorber 40 is insertable into the connecting end 26. In this way, the sound absorber 40 is held safely and tightly in particular in the vicinity of the connecting end 26, precluding any vibrations.

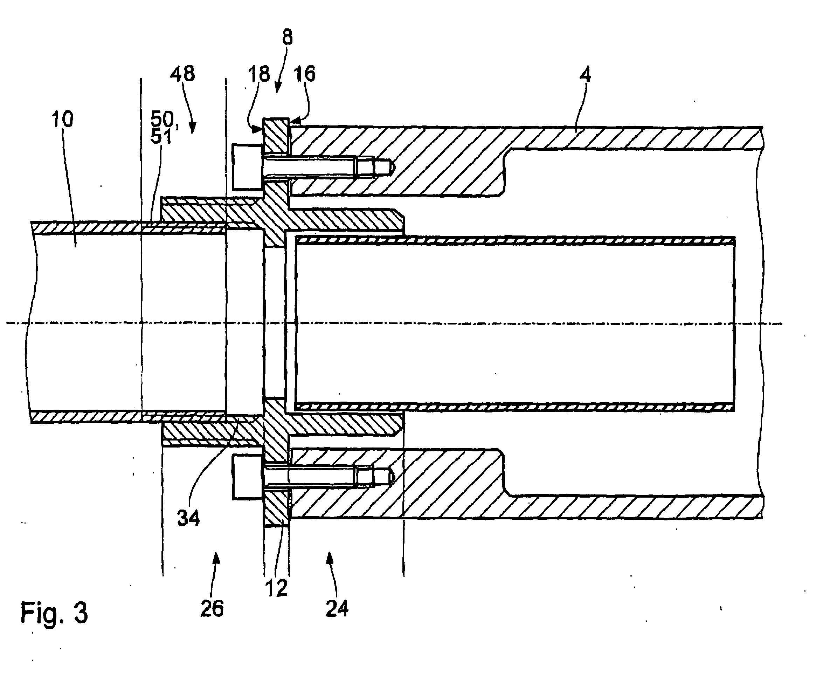

Fig. 3 shows the connector 8 according to Fig. 2 in a rotated position in which the connector 8 is placed by the front 16 on the connecting piece 4. Consequently, the connecting end 24, which is disposed on the front 16, is located within the connecting piece 4 and the connecting end 26; which is a threaded connecting piece, is located outside the connecting piece 4. This arrangement serves for connection of a duct end 48 of the fluid duct 10, the duct end 48 being provided with a thread 51 in the form of an external thread 50. The fluid duct 10 is joined to the connector 8 by the external thread 50 on the duct end 48 cooperating with the internal thread 34 of the connecting end 26.

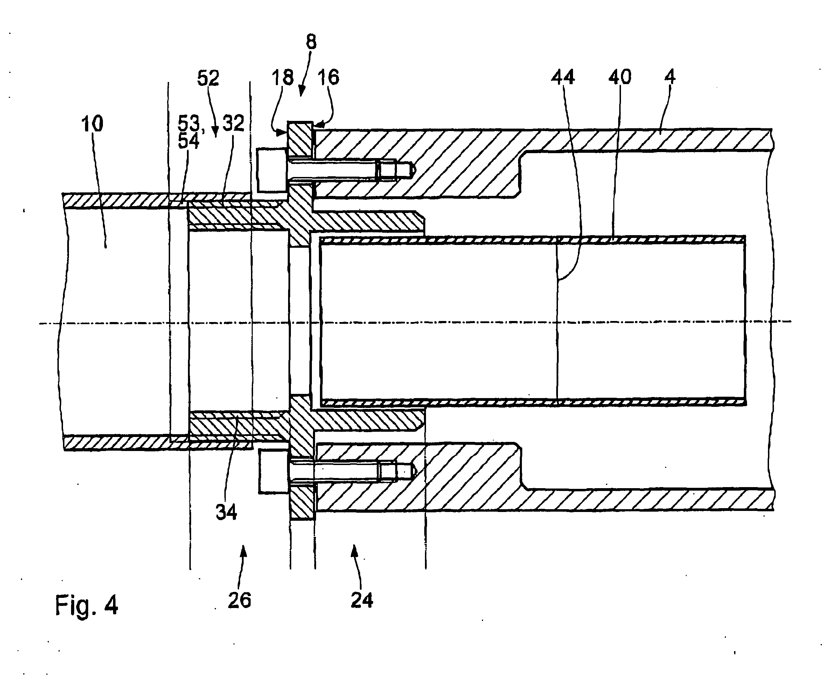

According to Fig. 4, fluid-duct-10 end 52 which has a thread 54 in the form of an internal thread 53 is fixed by screwing to the external thread 32 of the connecting end 26.

In the arrangement, seen in Figs. 3 and 4, of the connector 8, the sound absorber 40 is inserted into the connecting end 24.

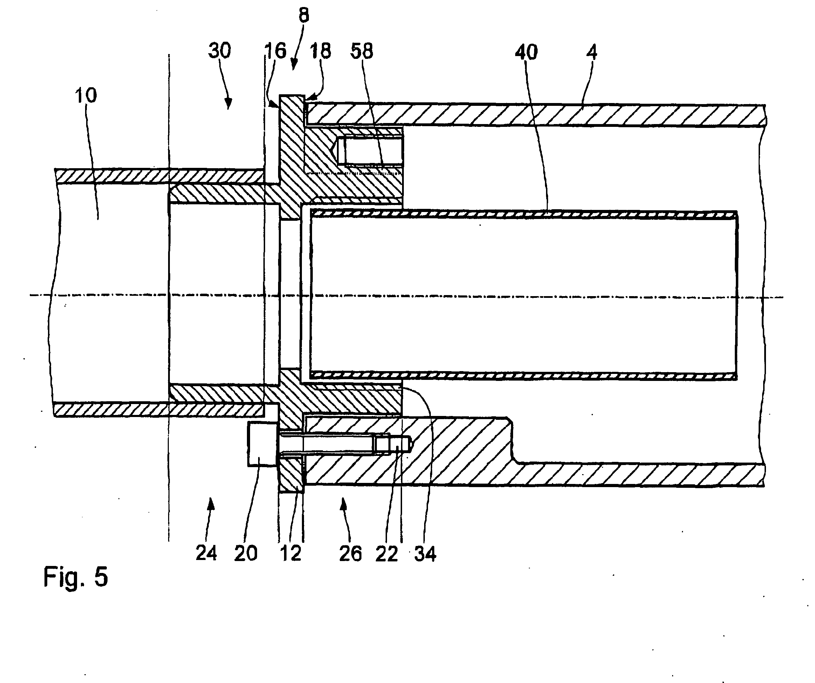

Figs. 5, 6 and 7 show an alternative embodiment of the connector 8 in a longitudinal sectional view I-I through the connector 8 of Fig. 1. The connector 8 differs from the embodiment seen in Figs. 2 to 4 by the connecting end 26 being provided with a screwed-flange connection 58 in addition to the internal thread 34.

By analogy to Fig. 2, Fig. 5 illustrates the connector 8 with the connecting end 24 being disposed outside the connecting piece 4 and the connecting end 26 inside the connecting piece 4, the connecting end 24 again being placed on the duct end 30 of the fluid duct 10 of the type of a hose assembly.

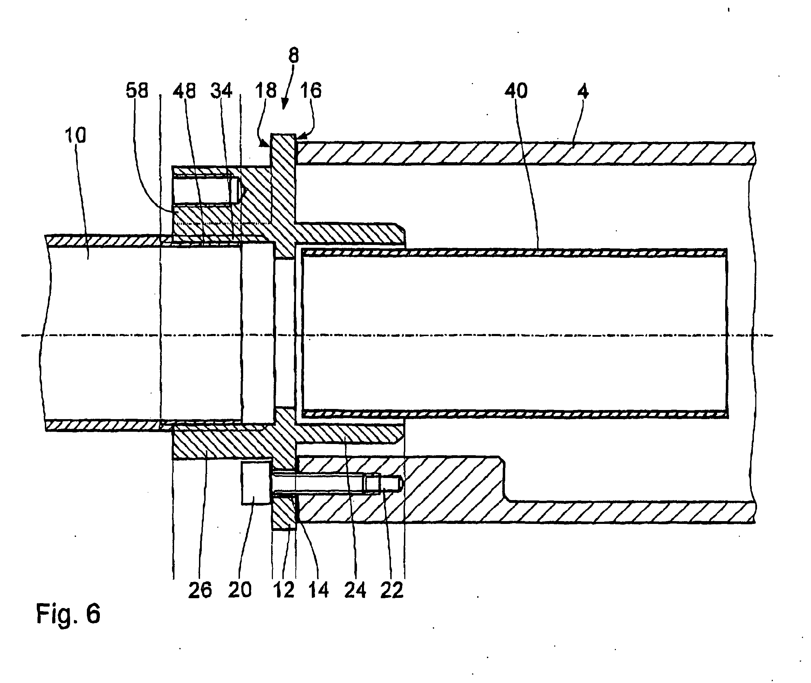

By analogy to Fig. 3, Fig. 6 shows the connector of Fig. 5 in a rotated position, in which the connecting end 24 is disposed inside and the connecting end 26 outside the connecting piece 4. Again, the fluid-duct-10 end 48 which is provided with an external thread 50 is joined by screwing to the internal thread 34 of the connecting end 26. The screwed flange connection 58 remains unoccupied.

In the embodiment of the connector 8 according to Figs. 5 to 7, the screwed flange 12 possesses an odd number of (in particular three) through holes 14, and the screwed-flange connection 58 an odd number of (in particular three) screw holes 66- The through holes 14 and the screw holes 66 are distributed regularly along the circumference of the connector 8, with the through holes 14 and the screw holes 66 being displaced one in relation to the other in the peripheral direction for free accessibility of the through holes 14 from both fronts 16 and 18 of the screwed flange 12.

## Claims

1. A compressor, comprising an inlet or outlet connecting piece (4, 4a, 4b) and a connector (8) for connection of a fluid duct (10) to the inlet or outlet connecting piece (4, 4a, 4b),
wherein the connector (8) comprises a flange (12) for connection to the inlet or outlet connecting piece (4, 4a, 4b) and first (24) and second (26) connecting ends for connection to a duct end (28, 30, 48, 52, 60) of the fluid duct (10), the invention **characterized by**:
the connector (8) being removeably coupleable to said inlet or outlet connecting piece (4, 4a, 4b);
the connector (8) having a first coupled position wherein said connector (8) is coupled to said inlet or outlet connecting piece (4, 4a, 4b) and in
said first coupled position, said first connecting end (24) is in a first position relative to said inlet or outlet piece (4, 4a, 4b); and the connector (8) having a second coupled position wherein said connector (8) is coupled to said inlet or outlet connecting piece (4, 4a, 4b) and in said second coupled position, said first connecting end (24) is in a second connecting position relative to said inlet or outlet connecting piece (4, 4a, 4b), said first connecting position different from said second connecting position.

2. A compressor according to claim 1, **characterized**
**in that** the connector (8) comprises two connecting ends (24, 26) which are disposed on both sides of the flange (12), with the flange (12) being optionally connectable to one of two fronts (16, 18) so that one connecting end (24, 26) is disposed inside the inlet or outlet connecting piece (4, 4a, 4b) and the other connecting end (24, 26) is disposed outside the inlet or outlet connecting piece (4, 4a, 4b).

3. A compressor according to claim 1 or 2, **characterized**
**in that** the connecting end (24) is a hose joint.

4. A compressor according to claim 1 or 2, **characterized**
**in that** the connecting end (26), for connection of a duct end (48, 52) that is provided with a thread (51, 54), comprises a threaded connecting piece that is provided with an internal thread (34) and/or external thread (32).

5. A compressor according to claim 1 or 2, **characterized in that**, for a duct end (60) provided with a thread to be joined, the connecting end (26) is a flange joint (58), forming a pair of flanges.

6. A compressor according to one of claims 1 to 5, **characterized by** a sound absorber (40) which is joined to a connecting end (24, 26) that is disposed inside the inlet or outlet connecting piece (4, 4a, 4b).

## Patentansprüche

1. Ein Verdichter, umfassend ein Einlass- oder Auslass-Anschlussstück (4, 4a, 4b) sowie einen Anschluss (8) zum Anschließen einer Fluidleitung (10) an das Einlass- oder Auslass-Anschlussstück (4, 4a, 4b), wobei der Anschluss (8) einen Flansch (12) zum Anschließen an das Einlass- oder Auslass-Anschlussstück (4, 4a, 4b) sowie erste (24) und zweite (26) Anschluss-Endstücke zum Anschließen an ein Leitungsende (28, 30, 48, 52, 60) der Fluidleitung (10) umfasst, und wobei die Erfindung **dadurch gekennzeichnet ist,**
**dass** der Anschluss (8) lösbar an das Einlass- oder Auslass-Anschlussstück (4, 4a, 4b) ankoppelbar ist;
**dass** der Anschluss (8) eine erste Ankoppelposition aufweist, in der der Anschluss (8) an das Einlass- oder Auslass-Anschlussstück (4, 4a, 4b) angekoppelt ist und das erste Anschluss-Endstück (24) sich in der ersten Ankoppelposition in einer ersten Position in Bezug auf das Einlass- oder Auslass-Stück (4, 4a, 4b) befindet, und dass der Anschluss (8) eine zweite Ankoppelposition aufweist, in der der Anschluss (8) an das Einlass- oder Auslass-Anschlussstück (4, 4a, 4b) angekoppelt ist und das erste Anschluss-Endstück (24) sich in der zweiten Ankoppelposition in einer zweiten Anschlussposition in Bezug auf das Einlass- oder Auslass-Anschlussstück (4, 4a, 4b) befindet, wobei sich die erste Anschlussposition von der zweiten Anschlussposition unterscheidet.

2. Ein Verdichter gemäß Anspruch 1, **dadurch gekennzeichnet, dass** der Anschluss (8) zwei Anschluss-Endstücke (24, 26) umfasst, die auf beiden Seiten des Flansches (12) angeordnet sind, wobei der Flansch (12) wahlweise mit einer von zwei Vorderseiten (16, 18) anschließbar ist, so dass ein Anschluss-Endstück (24, 26) innerhalb des Einlass- oder Auslass-Anschlussstücks (4, 4a, 4b) angeordnet ist und das andere Anschluss-Endstück (24, 26) außerhalb des Einlass- oder Auslass-Anschlussstücks (4, 4a, 4b) angeordnet ist.

3. Ein Verdichter gemäß Anspruch 1 oder 2, **dadurch gekennzeichnet, dass** das Anschluss-Endstück (24) als Schlauchanschluss ausgebildet ist.

4. Ein Verdichter gemäß Anspruch 1 oder 2, **dadurch gekennzeichnet, dass** das Anschluss-Endstück (26) zum Anschließen eines mit einem Gewinde (51, 54) versehenen Leitungsendes (48, 52) ein Gewinde-Anschlussstück umfasst, das ein Innengewinde (34) und/oder ein Außengewinde (32) aufweist.

5. Ein Verdichter gemäß Anspruch 1 oder 2, **dadurch gekennzeichnet, dass** das Anschluss-Endstück (26) zum Anschließen eines mit einem Gewinde versehenen Leitungsendes (60) als Flanschanschluss (58) ausgebildet ist, der ein Flanschpaar bildet.

6. Ein Verdichter gemäß einem der Ansprüche 1 bis 5, **gekennzeichnet durch** einen Schalldämpfer (40) der an ein Anschluss-Endstück (24, 26) angeschlossen ist, das innerhalb des Einlass- oder Auslass-Anschlussstücks (4, 4a, 4b) angeordnet ist.

## Revendications

1. Compresseur comprenant une pièce de raccordement d'entrée ou de sortie (4, 4a, 4b) et un connecteur (8) pour le raccordement d'un conduit de fluide (10) à la pièce de raccordement d'entrée ou de sortie (4, 4a, 4b),
dans lequel le connecteur (8) comprend un rebord (12) pour le raccordement à la pièce de raccordement d'entrée ou de sortie (4, 4a, 4b) et des première (24) et seconde (26) extrémités de raccordement pour le raccordement à une extrémité de conduit (28, 30, 48, 52, 60) du conduit de fluide (10), l'invention étant **caractérisée par** :
le connecteur (8) pouvant être couplé de manière amovible à ladite pièce de raccordement d'entrée ou de sortie (4, 4a, 4b) ;
le connecteur (8) ayant une première position couplée dans laquelle ledit connecteur (8) est couplé à ladite pièce de raccordement d'entrée ou de sortie (4, 4a, 4b) et dans ladite première position couplée, ladite première extrémité de raccordement (24) est dans une première position par rapport à ladite pièce d'entrée ou de sortie (4, 4a, 4b) ; et le connecteur (8) ayant une seconde position couplée dans laquelle ledit connecteur (8) est couplé à ladite pièce de raccordement d'entrée ou de sortie (4, 4a, 4b) et dans ladite seconde position couplée, ladite première extrémité de raccordement (24) est dans une seconde position de raccordement par rapport à ladite pièce de raccordement d'entrée ou de sortie (4, 4a, 4b), ladite première position de raccordement étant différente de ladite seconde position de raccordement.

2. Compresseur selon la revendication 1 **caractérisé en ce que** le connecteur (8) comprend deux extrémités de raccordement (24, 26) qui sont disposées des deux côtés du rebord (12), avec le rebord (12) qui peut être raccordé de manière facultative à l'une des deux parties avant (16, 18) de sorte qu'une extrémité de raccordement (24, 26) est disposée à l'intérieur de la pièce de raccordement d'entrée ou de sortie (4, 4a, 4b) et l'autre extrémité de raccordement (24, 26) est disposée à l'extérieur de la pièce de raccordement d'entrée ou de sortie (4, 4a, 4b,).

3. Compresseur selon la revendication 1 ou 2 **caractérisé en ce que** l'extrémité de raccordement (24) est un joint de tuyau flexible.

4. Compresseur selon la revendication 1 ou 2 **caractérisé en ce que** l'extrémité de raccordement (26), pour le raccordement d'une extrémité de conduit (48, 52) qui est prévue avec un filetage (51, 54) comprend une pièce de raccordement filetée qui est prévue avec un filetage interne (34) et/ou un filetage externe (32).

5. Compresseur selon la revendication 1 ou 2 **caractérisé en ce que**, pour une extrémité de conduit (60) prévue avec un filetage à assembler, l'extrémité de raccordement (26) est un joint à rebords (58) formant une paire de rebords.

6. Compresseur selon l'une quelconque des revendications 1 à 5, **caractérisé par** un absorbeur acoustique (40) qui est assemblé à l'extrémité de raccordement (24, 26) qui est disposée à l'intérieur de la pièce de raccordement d'entrée ou de sortie (4, 4a, 4b).
